# EUROPEAN PATENT APPLICATION

(11) **EP 4 796 867 A2**
(43) Date of publication of application: **26.08.2026**
(21) Application number: 26158495.7
(22) Date of filing: 13.02.2026
(51) Int. Cl.: F24S 25/30, F24S 25/61, F24S 25/613

(54) **ROOF MOUNTING SYSTEM**

(30) Priority: 25.02.2025 US 202519062441
(71) Applicant: Tesla, Inc., Austin, TX 78725 (US)
(72) Inventor: PASTERNAK, Jacob, Austin, Texas 78725 (US); PUKINSKIS, Brencis Leonards, Austin, Texas 78725 (US); LEMUS, Dylon Daniel, Austin, Texas 78725 (US)
(74) Representative: Liesegang, Eva

(57) **Abstract**

Generally described, one or more aspects of the present disclosure relate to a solar panel mount (100) for a tile roof. The mount (100) includes a flashing (110) sized to replace one tile of the tile roof, a plurality of fasteners, a rail mount (120) including a plurality of fastener flanges (128) arranged in a mounting pattern, a plurality of fastener retainment inserts (160), a spacer (130), and a gasket (150). The spacer (130) is configured to be positioned on an opposite side of the flashing (110) from the rail mount (120), and the plurality of fasteners (140) are configured to secure the rail mount (120), the flashing (110), and the spacer (130) to a roof decking of the roof.

## Description

This application claims the benefit of priority to U.S. Patent Application No. 19/062441, entitled "ROOF MOUNTING SYSTEM," filed on February 25, 2025, which is hereby incorporated by reference in its entirety and for all purposes.

### BACKGROUND

### Field

The present disclosure relates to a roof mounting system. More specifically, the roof mounting system can be employed to mount solar panels independent of rafter location.

### Description of the Related Art

Many types of solar mounting hardware exist. However, these mounting systems may be time consuming to install and additionally limit possible solar panel mounting locations due to being reliant on rafter locations. Thus, existing mounting solutions may result in suboptimal placement locations.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, a solar panel mount for a tile roof is disclosed. The solar panel mount including a flashing sized to replace one or more tiles of the tile roof, a plurality of fasteners, a rail mount including a plurality of fastener flanges arranged in a mounting pattern, the rail mount positioned on a first side of the flashing, a plurality of fastener retainment inserts positioned within the plurality of fastener flanges, a spacer positioned on a second side of the flashing, and a gasket positioned against the spacer and opposite the flashing. The plurality of fasteners are engaged in the plurality of fastener retainment inserts, and the plurality of fasteners are configured to secure the rail mount, the flashing, and the spacer to a roof decking of the roof.

In some aspects, a solar panel mount for a tile roof is disclosed. The solar panel mount including a flashing, a rail mount including a plurality of fastener flanges positioned on a surface of the rail mount and arranged in a mounting pattern, and a spacer. The spacer is configured to be positioned on an opposite side of the flashing from the rail mount, and the rail mount is configured to be secured to a roof decking with a plurality of fasteners.

In some embodiments, the rail mount includes a mounting rail perpendicular to the surface of the rail mount. In some embodiments, the plurality of fastener flanges include a plurality of fastener retainment inserts. In some embodiments, the plurality of fastener flanges includes 6 fastener flanges. In some embodiments, the solar panel mount includes the plurality of fasteners. In some embodiments, the plurality of fasteners includes deck screws, with each deck screw including a sealing gasket washer. In some embodiments, the spacer includes a plurality of spacer fastener flanges configured to engage with a second surface of the rail mount, wherein the second surface is opposite from the surface. In some embodiments, the second surface of the rail mount includes a plurality of complementary recesses configured to engage the plurality of spacer fastener flanges. In some embodiments, the spacer is configured to engage with the rail mount through the flashing. In some embodiments, the spacer includes a plurality of snap-fits, and the rail mount includes a plurality of complementary snap-fits configured to engage with the plurality of snap-fits. In some embodiments, the flashing includes an inset mounting surface configured to be substantially parallel with the roof decking when the solar panel mount is installed on the tile roof. In some embodiments, the inset mounting surface defines a plurality of clearance holes, and the spacer engages with the rail mount through the plurality of clearance holes. In some embodiments, the solar panel mount includes a gasket positioned against a surface of the spacer opposite from the flashing. In some embodiments, the gasket is configured to seal around the plurality of fasteners when the mount is fastened to the tile roof. In some embodiments, the gasket includes a sealing foam.

In some aspects, a method of installing a solar panel mount to a roof deck is disclosed. The method can include: providing a pre-assembled solar panel mount comprising a flashing, a rail mount, and a spacer; replacing a roof tile with the pre-assembled solar panel mount configured to couple a solar panel to a roof without locating a rafter or assembling any components of the solar panel mount; and securing the pre-assembled solar panel mount to the roof deck with one or more fasteners.

In some embodiments, the pre-assembled solar panel mount includes a gasket configured to seal around the one or more fasteners. In some embodiments, the method includes drilling lead-in holes in the roof deck. In some embodiments, the one or more fasteners are captive in the pre-assembled solar panel mount.

### BRIEF DESCRIPTION OF THE DRAWINGS

The present inventions are described with reference to the accompanying drawings, in which like reference characters reference like elements, and wherein:
FIG. 1 is a perspective illustration of a solar panel mounting system according to the disclosure.
FIG. 2 is a front section exploded view illustration of a solar panel mounting system according to the disclosure.
FIG. 3 is a perspective illustration of a solar panel mounting system and a mounted solar panel according to the disclosure.
FIG. 4 is a perspective illustration of a rail mount according to the disclosure.
FIG. 5 is a perspective illustration of a spacer according to the disclosure.
FIG. 6 is a perspective illustration of a gasket according to the disclosure.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to a solar panel mount for attaching a solar panel to a tile roof, for example, a concrete tile roof or a ceramic tile roof. The mount can include a flashing which can replace one tile on the roof and a rail mount which can include a plurality of fastener flanges arranged in a mounting pattern. A plurality of screws can pass through the flashing and the fastener mounts. A spacer can be positioned under the flashing and can support the rail mount against a roof decking. A gasket can form a watertight seal around the deck mounting face of the spacer, thereby assuring that water cannot pass through the mounting points and through the roof decking. Advantageously, the solar panel mount can be pre-assembled and the solar panel mount can include the tile replacement flashing. The solar panel mount is advantageously quick and efficient to install because it is a direct replacement of the concrete tile, regardless of the rafter location.

Generally described, one or more aspects of the present disclosure relate to a method of mounting a solar panel mount to a tile roof. The method can include providing a pre-assembled solar panel mount including any of the features described herein, for example, a flashing, a rail mount, a spacer, and a plurality of screws. The method can include drilling lead-in holes in the roof deck. In some examples, the method includes replacing a roof tile with the pre-assembled solar panel mount and fastening the plurality of screws into a roof deck. Advantageously, the pre-assembled solar panel mount can be mounted to a roof as a single unitary body, thereby reducing the number of components to coordinate while installing the solar panel mount. In some examples, a plurality of solar panel mounts can be installed on the roof and a solar panel can be mounted to a spanner bar connected to the one or more solar panel mounts.

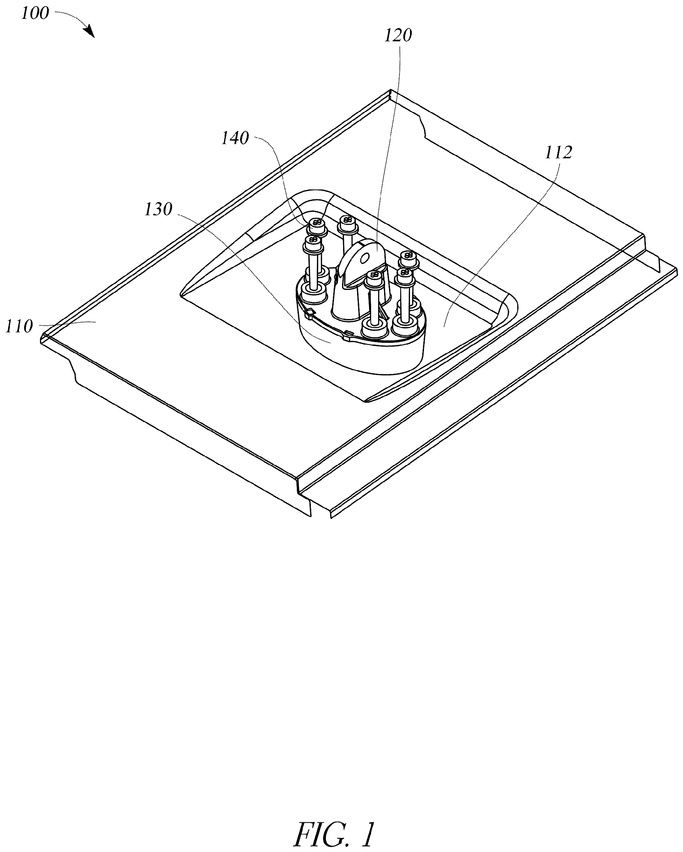

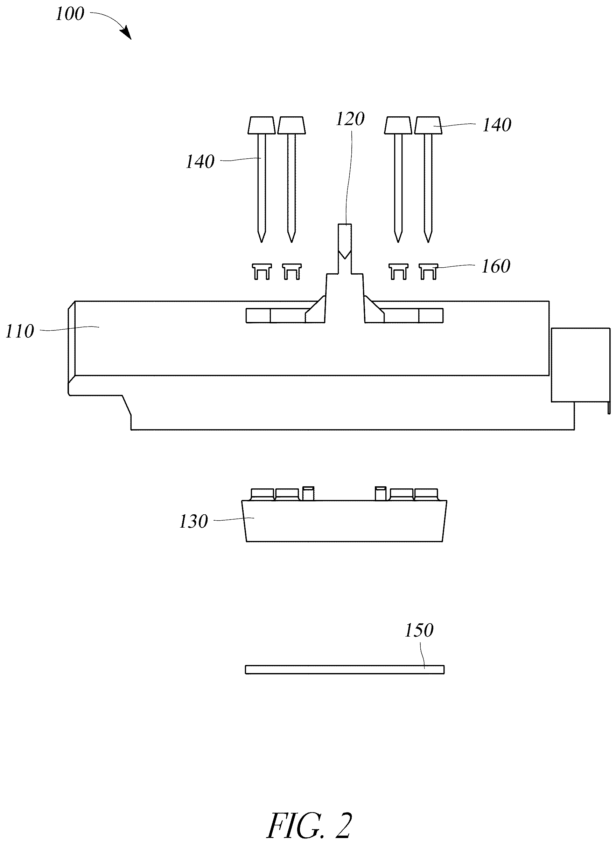

FIGS. 1 and 2 illustrate a solar panel mount 100 according to the disclosure. FIG. 1 illustrates a perspective view of the solar panel mount 100 and FIG. 2 illustrates an exploded view of the solar panel mount 100. The solar panel mount 100 can include a flashing 110, a rail mount 120, a spacer 130, a plurality of fasteners 140, a gasket 150, and a plurality of fastener retainment inserts 160.

The flashing 110 can be sized to replace one or more roof tiles. In some examples, the roof tile can be a standard roof tile. In some examples, the flashing 110 can have a width of, or of about 8 inches, 8.5 inches, or 12.375 inches. In some examples, the flashing 110 can have a width of, or of about 8 inches, 8.25 inches, 8.5 inches, 8.75 inches, 9 inches, 9.25 inches, 9.5 inches, 9.75 inches, 10 inches, 10.25 inches, 10.5 inches, 10.75 inches, 11 inches, 11.25 inches, 11.5 inches, 11.75 inches, 12 inches, 12.5 inches, 12.75 inches, 13 inches, 13.25 inches, 13.5 inches, 13.75 inches, or any range of values therebetween. In some examples, the flashing 110 can have a length of, or of about 16.5 inches, 17 inches, 19 inches, 19.5 inches, or 20 inches. In some examples, the flashing 110 can have a length of, or of about 16 inches, 16.5 inches, 17 inches, 17.5 inches, 18 inches, 18.5 inches, 19 inches, 19.5 inches, 20 inches, 20.5 inches, 21 inches, 21.5 inches, 22 inches, 22.5 inches, 23 inches, 23.5 inches, or 24 inches. The flashing 110 can include an inset mounting portion 112. The inset mounting portion 112 can be at an angle to the flashing 110 so that the inset mounting portion 112 can be substantially parallel to the pitch of the roof decking while the flashing 110 is substantially parallel with the roof tiles. The flashing 110 can mate with the roofing tiles when the solar panel mount 100 is installed. The inset mounting portion 112 can be at an angle to the portion of the flashing which mounts with the roofing tiles. For example, the angle can be at least, at least about, or about 0, 5, 10, 15, 20 25, 30, 35, 40, or 45 degrees. The inset mounting portion 112 of the flashing 110 can include a plurality of clearance holes. The plurality of fasteners 140 can pass through the plurality of clearance holes. In some examples, the clearance holes can be slot shaped and allow for shifting the plurality of fasteners 140 a distance along the inset mounting portion 112 in either a latitudinal or longitudinal direction, or a combination thereof. For example, the clearance holes can allow the rail mount 120 to shift 0 mm, 0.25 mm, 0.5 mm, 0.75 mm, 1 mm, 1.25 mm, 1.5 mm, 1.75 mm, 2 mm, or more in a longitudinal or latitudinal direction within the inset mounting portion 112 in a positive or negative direction, or any range therebetween.

The rail mount 120 can be positioned on an exterior side of an inset mounting portion 112 of the flashing 110. The spacer 130 can be positioned on an interior side of the flashing 110. The spacer 130 can snap to the rail mount 120 through the clearance holes in the flashing 110. The gasket 150 can be positioned on the interior side of the flashing 110. The gasket 150 can be positioned against a surface of the spacer 130 opposite from the flashing 110. The plurality of fasteners 140 can pass through the rail mount 120, the clearance holes of the flashing 110, the spacer 130, and the gasket 150. The gasket 150 can form a seal around the plurality of fasteners 140 to assure that mounting the gasket 150 to the roof decking is watertight.

The plurality of fasteners 140 can be screws (e.g., decking screws, wood screws, self-drilling screws, concrete screws, or sheet metal screws), pins, staples, rivets, nails, anchors, or other fasteners known in the art. In some examples, each fastener 140 can include a sealing gasket washer, thread-lock, or a water-sealant.

In some examples, the solar panel mount 100 can advantageously be pre-assembled prior to assembling the solar panel mount 100 on a roof. Because the solar panel mount 100 can be supported by the roof decking, the rail mount 120, the spacer 130, the gasket 150, the plurality of fastener retainment inserts 160, and the plurality of fasteners 140 can be attached to the flashing 110 prior to assembling the solar panel mount 100 on a roof. The plurality of fastener retainment inserts 160 can capture the plurality of fasteners 140 in the pre-assembled solar panel mount 100. The plurality of fastener retainment insets 160 hold the plurality of fasteners 140 captive in the solar panel mount 100. The solar panel mount 100 can be secured to the roof deck with the plurality of fasteners 140. The plurality of fasteners 140 can secure the rail mount 120, the flashing 110, and the spacer 130 to the roof decking of a roof. The pre-assembly of the solar panel mount 100 can advantageously make installing the solar panel mount 100 simple and efficient. The solar panel mount 100 can then be installed by replacing a roof tile with the solar panel mount 100 and then threading the fasteners 140 into the roof decking.

A plurality of solar panel mounts 100 can be installed on a roof. For example, four solar panel mounts 100 can be installed to support a solar panel. In some embodiments, 1, 2, 3, 4, 5, 6, 7, 8, 9, 10, or more solar panel mounts 100 can be installed on a roof to support a solar panel. In some examples, a spanner bar is connected to 1, 2, 3, 4, solar panel mounts 100. In some examples, the solar panel is mounted on one or more of the spanner bars. In some examples, more than one solar panel can be installed on a roof. In some examples, the solar panel mounts 100 can be used to mount something other than a solar panel. For example, a satellite or a solar water heater.

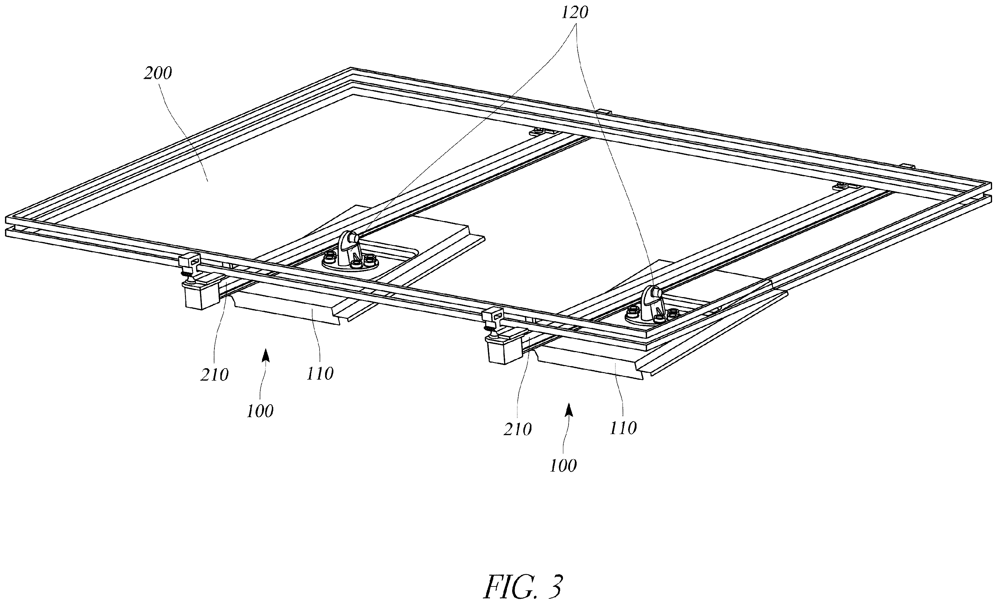

FIG. 3 illustrates a perspective view of a solar panel 200 mounted on a pair of solar panel mounts 100. The pair of solar panel mounts 100 can be space apart from one another. The pair of solar panel mounts 100 can support the solar panel 200. A pair of spanner bars 210 can be positioned between the pair of solar panel mounts 100 and the solar panel 200. The spanner bars 210 can attach the solar panel 200 to the solar panel mounts 100. The spanner bars 210 can be spaced apart from one another to support the solar panel 200. Each spanner bar 210 can attach to the underside of the solar panel 200. Each spanner bar 210 can attach to one of the solar panel mounts 100. The first spanner bar 210 can attach to a first rail mount 120 of the first solar panel mount 100. The second spanner bar 210 can attach to a second rail mount 120 of the second solar panel mount 100. In some examples, the first spanner

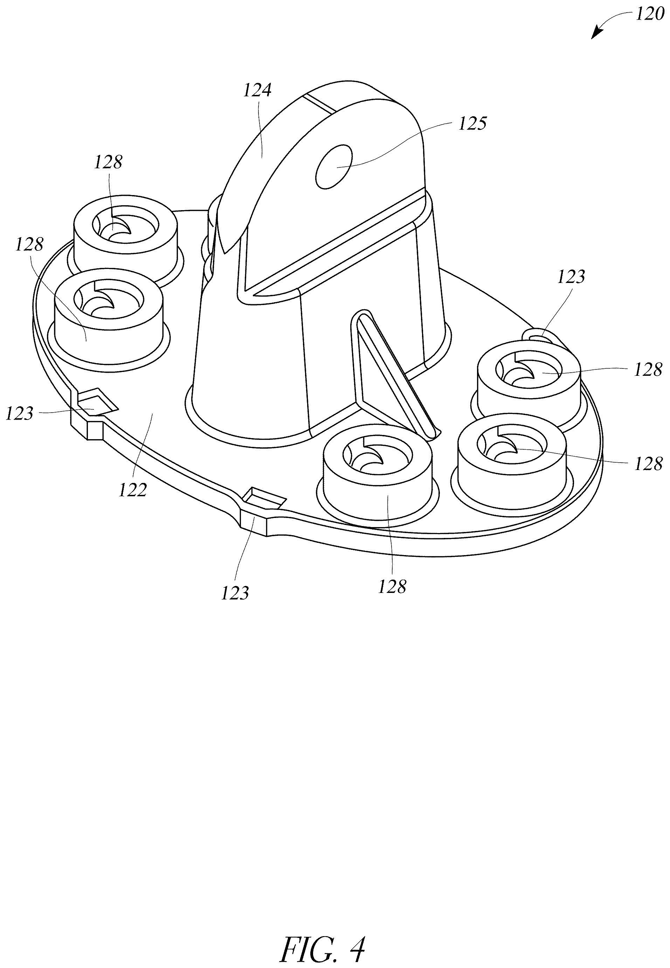

FIG. 4 illustrates a perspective view of a rail mount 120. The rail mount 120 can include a flashing mount 122 and a mounting rail 124. The flashing mount 122 can be a planar surface which can contact the flashing 110. The mounting rail 124 can extend from the flashing mount 122 in an external direction. As described herein, an external direction describes a direction from the exterior side of the roof away from the interior side of the roof. The mounting rail 124 can be perpendicular to the flashing mount 122. The mounting rail 124 can include a through hole 125. The through hole 125 can be used to attach a spanner bar to the solar panel mount 100. A solar panel can mount onto one or more spanner bars. The mounting rail 124 can include a planar face on either side of the through hole 125. In some examples, the planar faces can be machined surfaces.

A plurality of fastener flanges 128 can be arranged around the mounting rail 124 on an external surface of the flashing mount 122. The rail mount 120 can include six fastener flanges 128 which can be arranged symmetrically around the mounting rail 124. In some embodiments, the rail mount 120 can include 2, 3, 4, 5, 6, 7, 8, 9, or 10 fastener flanges 128. Each fastener flange 128 can include a raised circumference and a central through-hole. In some examples, each fastener flange 128 can include a pocket or engagement element to attach a fastener retainment insert 160 to the fastener flange 128. A fastener 140 can pass through the through-hole in each fastener flange 128. One or more snap-fits 123 can be positioned around the perimeter of the flashing mount 122. For example, 1, 2, 3, 4, 5, 6, 7, 8, or more snap-fits 123. The one or more snap-fits 123 can engage with the spacer 130 through the flashing 110 to hold the solar panel mount 100 together prior to assembly on a roof.

In some embodiments, the rail mount 120 can be made from aluminum, iron, or steel. In some embodiments, the rail mount 120 can be made from a plastic, for example, polycarbonate, acrylic, PVC, or another plastic. In some embodiments, the rail mount 120 can be a casting. In some embodiments, the rail mount 120 can be formed by welding a mounting rail 124 to a flashing mount 122.

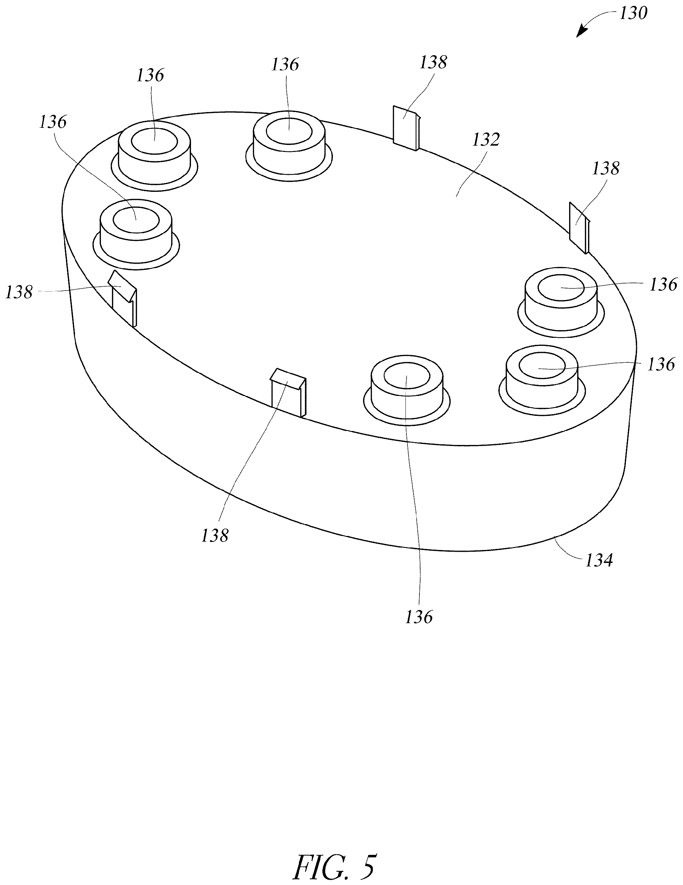

FIG. 5 illustrates a perspective view of a spacer 130. The spacer 130 can have the shape of an elliptical cylinder in certain embodiments. In some embodiments, the spacer can have the shape of a rectangular prism or any other shape. The spacer 130 can have a height which spans the distance between the flashing 110 and the roof decking, in some embodiments. For example, the spacer 130 can have a height of, or of about 10 mm, 15 mm, 20 mm, 25 mm, 30 mm, 35 mm, 40 mm, 45 mm, 50 mm or any range of values therebetween.

A plurality of fastener flanges 136 can be arranged around the circumference of the spacer 130 on a first surface 132. The plurality of fastener flanges 136 can be arranged in the same pattern as the plurality of fastener flanges 128 on the rail mount 120, in some examples. The spacer 130 can include six fastener flanges 136 which can be arranged symmetrically in certain embodiments. In some embodiments, the spacer 130 can include 2, 3, 4, 5, 6, 7, 8, 9, 10, or more fastener flanges 136. Each fastener flange 136 can include a raised circumference and a central through-hole. The raised circumferences of the fastener flanges 136 can fit within recesses in the underside of the rail mount 120 which can have a complementary shape to the fastener flanges 136. The raised circumferences can advantageously aid in locating the spacer 130 while assembling the solar panel mount 100.

A fastener 140 can pass through the through-hole in each fastener flange 136. One or more snap-fits 138 can be positioned around the perimeter of the spacer 130. For example, 1, 2, 3, 4, 5, 6, 7, 8, or more snap-fits 138. The one or more snap-fits 138 can engage with the one or more snap-fits 123 of the rail mount 120 through the flashing 110 to hold the solar panel mount 100 together prior to assembly on a roof. In some examples, the spacer 130 can be made from an injection molded plastic, a composite material, aluminum, or steel.

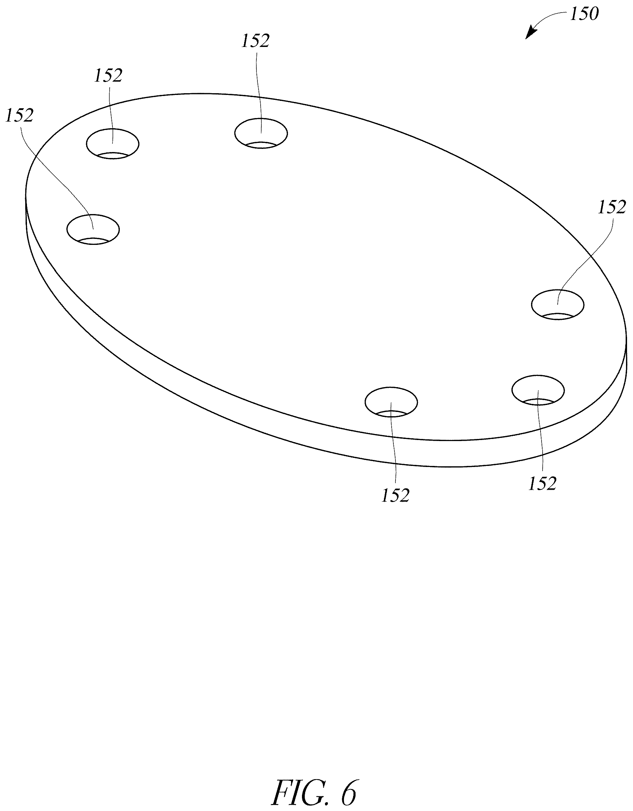

FIG. 6 illustrates a perspective view of a gasket 150. The gasket 150 can have generally the same perimeter as the spacer 130. The gasket 150 can include a plurality of through holes 152 arranged around the circumference of the gasket 150. The plurality of holes 152 can be arranged in the same pattern as the plurality of fastener flanges 136 on the spacer 130. A fastener 140 can pass through each of the plurality of holes 152. In some examples, each of the plurality of holes 152 can have a diameter slightly undersized, equal to, or slightly oversized from the diameter of the fastener 140. The gasket 150 can be made of sealing foam, butyl sealant, or another gasket material. The gasket 150 advantageously seals the holes in the roof decking once the solar panel mount 100 is installed on the roof.

The foregoing disclosure is not intended to limit the present disclosure to the precise forms or embodiments disclosed herein. As such, it is contemplated that various alternative forms, embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments. However, as one skilled in the art will appreciate, various embodiments disclosed herein can be modified or otherwise implemented in various other ways without departing from the spirit and scope of the disclosure. Accordingly, this description is to be considered as illustrative and is for the purpose of teaching those skilled in the art the manner of making and using various embodiments of the disclosed mounting system. It is to be understood that the forms of disclosure herein shown and described are to be taken as representative embodiments. Equivalent elements, or materials may be substituted for those representatively illustrated and described herein. Moreover, certain features of the disclosure may be utilized independently of the use of other features, all of which is apparent to one skilled in the art after having the benefit of this description of the disclosure. Expressions such as "including", "comprising", "incorporating", "consisting of, "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., connected, associated, coupled, and the like) are only used to aid the reader's understanding of the present disclosure, and may not create limitations, particularly as to the position, orientation, or use of the elements disclosed herein. Therefore, joinder references, if any, are to be construed broadly. Moreover, such joinder references may not necessarily infer that two elements are directly connected to each other.

Additionally, all numerical terms, such as, but not limited to, "first", "second", "one", "another", or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed in certain cases, as is useful in accordance with a particular application.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A solar panel mount for a tile roof, the mount comprising:
a flashing;
a rail mount including a plurality of fastener flanges positioned on a surface of the rail mount and arranged in a mounting pattern on a first side of the flashing; and
a spacer;
wherein the spacer is configured to be positioned on an opposite side of the flashing from the rail mount; and
wherein the rail mount is configured to be secured to a roof decking with a plurality of fasteners.

2. The solar panel mount of claim 1:
wherein the flashing is sized to replace one or more tiles of the tile roof;
further the mount comprising
a plurality of fasteners;
a plurality of fastener retainment inserts positioned within the plurality of fastener flanges; and
a gasket positioned against the spacer and opposite the flashing;
wherein the plurality of fasteners are engaged in the plurality of fastener retainment inserts; and
wherein the plurality of fasteners are configured to secure the rail mount, the flashing, and the spacer to a roof decking of the roof.

3. The mount of claim 1 or 2, wherein the rail mount comprises a mounting rail perpendicular to the surface of the rail mount.

4. The mount of one of the preceding claims, wherein the plurality of fastener flanges comprise a plurality of fastener retainment inserts; and/or wherein the plurality of fastener flanges includes 6 fastener flanges.

5. The mount of one of the preceding claims, further comprising the plurality of fasteners.

6. The mount of one of the preceding claims, wherein the plurality of fasteners comprises deck screws, with each deck screw comprising a sealing gasket washer.

7. The mount of one of the preceding claims, wherein the spacer comprises a plurality of spacer fastener flanges configured to engage with a second surface of the rail mount, wherein the second surface is opposite from the surface; wherein the second surface of the rail mount preferably comprises a plurality of complementary recesses configured to engage the plurality of spacer fastener flanges.

8. The mount of one of the preceding claims, wherein the spacer is configured to engage with the rail mount through the flashing.

9. The mount of one of the preceding claims, wherein the spacer comprises a plurality of snap-fits, and the rail mount comprises a plurality of complementary snap-fits configured to engage with the plurality of snap-fits.

10. The mount of one of the preceding claims, wherein the flashing comprises an inset mounting surface configured to be substantially parallel with the roof decking when the solar panel mount is installed on the tile roof; wherein the inset mounting surface preferably defines a plurality of clearance holes, and wherein the spacer preferably engages with the rail mount through the plurality of clearance holes.

11. The mount of one of the preceding claims, further comprising a gasket positioned against a surface of the spacer opposite from the flashing.

12. The mount of claim 14, wherein the gasket is configured to seal around the plurality of fasteners when the mount is fastened to the tile roof; and/or wherein the gasket comprises a sealing foam.

13. A method of installing a solar panel mount to a roof deck, the method comprising:
providing a pre-assembled solar panel mount comprising a flashing, a rail mount, and a spacer;
replacing a roof tile with the pre-assembled solar panel mount configured to couple a solar panel to a roof without locating a rafter or assembling any components of the solar panel mount; and
securing the pre-assembled solar panel mount to the roof deck with one or more fasteners.

14. The method of claim 13, wherein the pre-assembled solar panel mount further comprises a gasket configured to seal around the one or more fasteners; and/or wherein the one or more fasteners are captive in the pre-assembled solar panel mount.

15. The method of claim 13 or 14, further comprising drilling lead-in holes in the roof deck.
